# EUROPÄISCHE PATENTANMELDUNG

(11) **EP 4 438 212 A1**
(43) Veröffentlichungstag der Anmeldung: **02.10.2024**
(21) Anmeldenummer: 23165959.0
(22) Anmeldetag: 31.03.2023
(51) Int. Cl.: B23D 61/02

(54) **WERKZEUGBLATT, WERKZEUGAUFNAHME, SYSTEM UND WERKZEUGMASCHINE**

(71) Anmelder: Hilti Aktiengesellschaft, 9494 Schaan (LI)
(72) Erfinder: Stahl, Jens, 86932 Lengenfeld (DE); CAI, Forrest, Shanghai, 201807 (CN)
(74) Vertreter: Hilti Aktiengesellschaft Corporate Intellectual Property

(57) **Zusammenfassung**

Die Erfindung betrifft ein Werkzeugblatt (14), das eine Struktur (24), die wenigstens zwei Elemente (22) umfasst, an wenigstens einer Seitenfläche (26) des Werkzeugblattes (14) aufweist, wobei die Struktur (24) mit ihren Elementen um eine zentrale Blattrotationsachse (R) des Werkzeugblattes (14) rotationssymmetrisch zu einem Rotationswinkel von weniger als 360°, insbesondere von höchstens 180°, jedoch zu keinem durch die Blattrotationsachse (R) verlaufenden Durchmesser des Werkzeugblattes (14) spiegelsymmetrisch ist. Ferner betrifft die Erfindung eine Werkzeugaufnahme (12), ein Werkzeugblatt-System (15) sowie eine Werkzeugmaschine (10). Sie ermöglicht ein besonderes sicheres Arbeiten.

## Beschreibung

Die Erfindung betrifft ein Werkzeugblatt, beispielsweise ein Kreissägeblatt. Derartige Werkzeugblätter können zusammen mit Werkzeugmaschinen wie beispielsweise Kreissägen oder Winkelschleifern verwendet werden. Derartige Werkzeugblätter erfordern oftmals eine seitenrichtige Montage. Anderenfalls sind beispielsweise Sägezähne falsch ausgerichtet, sodass ein Sägeblatt nicht oder nicht optimal schneidet. Weiter besteht ein Risiko, dass die Werkzeugmaschine in einem bearbeiteten Werkstück verklemmt, sodass es zu einem schlagartigen Rückstoß oder zu einem Gegendrehmoment kommen kann. Einem Benutzer der Werkzeugmaschine kann diese aus der Hand gerissen werden. Unfälle und Verletzungen können die Folge sein. Ähnliches gilt, wenn die Werkzeugmaschine von einem Bauroboter geführt wird. Auch hier können Ausfälle oder gar Schäden die Folge sein.

Aufgabe der vorliegenden Erfindung ist es daher, ein Werkzeugblatt sowie Vorrichtungen zur Nutzung eines solchen Werkzeugblattes anzubieten, die eine besonders sichere Nutzung desselben ermöglichen.

Gelöst wird die Aufgabe durch ein **Werkzeugblatt,** das eine Struktur, die wenigstens zwei Elemente umfasst, an wenigstens einer Seitenfläche des Werkzeugblattes aufweist, wobei die Struktur mit ihren Elementen um eine zentrale Blattrotationsachse des Werkzeugblattes rotationssymmetrisch zu einem Rotationswinkel von weniger als 360°, insbesondere von höchstens 180°, jedoch zu keinem durch die Blattrotationsachse verlaufenden Durchmesser des Werkzeugblattes spiegelsymmetrisch ist.

Das Werkzeugblatt weist also eine n-zählige Rotationssymmetrie auf, wobei n grösser als 1 ist.

Die Rotationssymmetrie und die Spiegelsymmetrie können in einer senkrechten Draufsicht auf die Seitenfläche zu beurteilen sein.

Dem liegt der konstruktiv überraschend einfache und dennoch überraschend wirkungsvolle Gedanke zugrunde, dass eine solche Kombination einer Rotationssymmetrie in Verbindung mit einer fehlenden Spiegelsymmetrie dem Werkzeugblatt eine Orientierung verleiht, sodass ein Verwechseln der Seiten des Werkzeugblattes bei der Montage ausgeschlossen werden kann.

Damit lässt sich das Werkzeugblatt nur noch seitenrichtig montieren. Eine seitenverkehrte Montage ist ausgeschlossen. Das Werkzeugblatt wird somit ordnungsgemäß genutzt und die eingangs geschilderten Risiken können minimiert oder sogar ausgeschlossen werden.

Weiter ist durch die Rotationssymmetrie sichergestellt, dass das Werkzeugblatt ausgewuchtet bleiben kann. Selbst bei hohen Rotationsgeschwindigkeiten kann es somit vibrationsarm rotieren. Auch dadurch kann ein Benutzer der Werkzeugmaschine das Werkzeugblatt besonders sicher mit der Hand führen. Gesundheitliche Schäden durch hohe Vibrationsbelastungen der Hand des Benutzers können vermieden werden.

Das Werkzeugblatt kann beispielsweise ein Sägeblatt für eine Kreissäge sein. Es kann sich um ein Holzsägeblatt handeln. Auch ist denkbar, dass das Werkzeugblatt als Blatt für einen Winkelschleifer ausgebildet ist. Allgemein kann es sich um ein Sägeblatt, ein Schleifblatt, beispielsweise zum Schleifen von Gestein, beispielsweise Beton, Holz oder dergleichen handeln.

Ein Spezialfall einer solchen n-zähligen Rotationsymmetrie ergibt sich, wenn die Struktur punktsymmetrisch zur Blattrotationsachse ist, d. h. bei einer 2-zähligen Rotationsymmetrie. Dazu können insbesondere jeweils zwei der Elemente der Struktur zueinander paarweise punktsymmetrisch zur Blattrotationsachse ausgebildet sein.

Wenigstens eines der Elemente kann eine Ausnehmung umfassen. Das Element kann eine Durchgangsöffnung sein oder eine solche umfassen. Derartige Ausnehmungen lassen sich einfach, beispielsweise durch Bohren oder Fräsen, herstellen. Da die Ausnehmungen somit nicht über die Oberfläche der Seitenfläche des Werkzeugblatts hinausragen, können das Werkzeugblatt auch mit herkömmlichen Werkzeugmaschinen, beispielsweise herkömmlichen Kreissägen oder Winkelschleifern, verwendet werden. Insbesondere behindern die Ausnehmungen bei derartigen herkömmlichen Werkzeugmaschinen nicht die Montage an diesen.

Denkbar ist allerdings auch, dass wenigstens eines der Elemente einen Vorsprung umfasst, der aus der Seitenfläche herausragt. Es können wenigstens zwei solcher Vorsprünge vorgesehen sein, um die notwendige Rotationssymmetrie sicherzustellen.

Dadurch dass die Vorsprünge aus der Seitenfläche herausragen, kann ein Benutzer bereits während der Montage unmittelbar erkennen, ob das Werkzeugblatt richtig montiert wird. Ist die Werkzeugmaschine eingerichtet, das Werkzeugblatt an den Vorsprüngen an der Werkzeugmaschine festzulegen, lässt sich das Werkzeugblatt überhaupt nicht seitenverkehrt montieren, sondern würde unmittelbar von der Werkzeugmaschine abrutschen. Der Benutzer wird somit unmittelbar davon abgehalten, die Werkzeugmaschine in Betrieb zu nehmen, solange das Werkzeugblatt nicht seitenrichtig an dieser montiert ist.

Wenigstens zwei der Elemente der Struktur können auf wenigstens zwei verschiedenen Radien um die Blattrotationsachse angeordnet sein. Hierdurch ist es möglich, das Schwingungsverhalten des Werkzeugblattes während der Rotation zu beeinflussen, so dass eine noch vibrationsärmere Nutzung ermöglicht wird.

Denkbar ist, dass das Werkzeugblatt eine zentrale Durchgangsöffnung aufweist, sodass auch hierdurch das Werkzeugblatt weiterhin für herkömmliche Werkzeugmaschinen, die üblicherweise eine solche zentrale Durchgangsöffnung voraussetzen, verwendbar bleibt.

Möglich ist aber auch, dass das Werkzeugblatt keine zentrale Durchgangsöffnung aufweist. Vielmehr kann das Werkzeugblatt über seine Elemente der Struktur, insbesondere mit Hilfe seiner Ausnehmungen und / oder Vorsprünge, direkt an einer geeignet ausgebildeten Werkzeugmaschine festlegbar sein und / oder festgelegt sein. Dadurch dass auch ein zentraler Bereich des Werkzeugblattes mit Material gefüllt bleibt, kann die Stabilität des Werkzeugblattes verbessert werden.

Eine besonders einfache, kostengünstig herstellbare Struktur kann beispielsweise lediglich zwei Elemente aufweisen. In diesem Fall ist es vorteilhaft, wenn die Elemente nicht kreisförmig ausgebildet sind, um trotz der geringen Anzahl von Elementen die Spiegelsymmetrie zu vermeiden. Zum Erhalt der Rotationssymmetrie sollten sich die zwei Elemente entlang eines Durchmessers durch die Blattrotationsachse gegenüberliegen.

Eine besonders einfache Möglichkeit zur Herstellung der Struktur ergibt sich auch, wenn wenigstens eines der Elemente, insbesondere die wenigstens zwei Elemente, eine nicht-kreisförmige Form, beispielsweise ein Langloch, umfasst. Eine solche nicht-kreisförmige Form erleichtert es ferner, das Werkzeugblatt, zumindest auch, mit Hilfe der Elemente an der Werkzeugaufnahme stabil zu fixieren. Durch den gegenüber einem Kreisrand verlängerten Rand ergibt sich eine verlängerte Kontaktzone zwischen in die Elemente eingreifenden Komplementärelementen einer Werkzeugaufnahme und dem Werkzeugblatt. Somit lassen sich Druckbelastungen vermindern, ein Ausfransen der Elemente kann vermindert oder vermieden werden. Somit lässt sich die Lebensdauer des Werkzeugblattes verlängern.

Die Struktur kann auch wenigstens zwei gleichartige Elemente aufweisen, die sich in ihrer Größe unterscheiden. Hierdurch ergeben sich konstruktive Gestaltungsmöglichkeiten, durch die sich das Schwingungsverhalten während der Rotation des Werkzeugblattes zusätzlich modifizieren lässt.

Wenigstens eines der Elemente kann eine Fase aufweisen, so dass das Werkzeugblatt einfacher an einer Werkzeugaufnahme einer Werkzeugmaschine montiert werden kann. Die Fase kann auch dazu beitragen, Funkenflug sowie Geräuschbildung des Werkzeugblattes während der Rotation zu reduzieren oder zu vermeiden.

Das Werkzeugblatt kann eine elektrische, magnetische und / oder elektromagnetische Funktion aufweisen. Insbesondere kann das Werkzeugblatt wenigstens eine Elektronik aufweisen. Beispielsweise kann das Werkzeugblatt mit einem Sensor ausgestattet sein.

Denkbar ist, dass wenigstens eines der Elemente elektrisch leitfähig ist. Weist das Element eine Ausnehmung oder eine Durchgangsöffnung auf, so kann darunter verstanden werden, dass ein Oberflächenbereich eines Randes der Ausnehmung oder der Durchgangsöffnung aus einem elektrisch leitfähigen Material ausgebildet ist.

Denkbar ist dann weiter, dass das wenigstens eine Element als elektrischer Kontakt ausgebildet ist. So kann, wenn beispielsweise die Werkzeugaufnahme der Werkzeugmaschine komplementär ausgebildete Gegenkontakte aufweist, ein elektrischer Kontakt zwischen der Werkzeugmaschine und der Elektronik des Werkzeugblattes hergestellt werden. Der Sensor kann somit beispielsweise eine Eigenschaft, beispielsweise einen Verschleißgrad, des Werkzeugblattes erfassen und entsprechende Daten über die Elemente an die Werkzeugmaschine übertragen.

Über wenigstens eines der Elemente der Struktur kann das Werkzeugblatt, insbesondere von einer Werkzeugmaschine, antreibbar sein.

Wenigstens eines der Elemente der Struktur kann sich in einer äußeren Hälfte, beispielsweise mit einem Radius im Bereich von 55 bis 100 Prozent, insbesondere innerhalb von 65 bis 85 Prozent, des anfänglichen Durchmessers des Werkzeugblattes befinden. Wird das Werkzeugblatt über ein solches, in der äußeren Hälfte befindlichen Elements angetrieben, werden zur Erreichung eines bestimmten Drehmoments lediglich geringe, am Werkzeugblatt wirkende Tangentialkräfte benötigt. Das Werkzeugblatt kann geringeren inneren Spannungen während der Rotation unterliegen. Die Lebensdauer des Werkzeugblattes lässt sich somit erhöhen. Denkbar ist auch aufgrund der hierdurch verbesserten Haltbarkeit, das Werkzeugblatt mit einem erhöhten Drehmoment zu beaufschlagen.

Beispielsweise bei Trennscheiben für Winkelschleifer ist es günstig, wenn sich das Element jedoch nicht zu weit außen, beispielsweise im Bereich von über 85 Prozent des anfänglichen Durchmessers, befindet, da es ansonsten von Abnutzung betroffen sein könnte.

Zudem ergeben sich über die genannten technischen Effekten hinaus innerhalb des Rahmens, der durch die vorangehend genannten Maßnahmen zur Erreichung der jeweiligen Vorzüge gegeben ist, durch Fein-Positionierung, Größe, Farbe und Form der Elemente, Schriftzüge und dergleichen gestalterische Freiheitsgrade, um dem Werkzeugblatt ein besonders ansprechendes Aussehen zu verleihen.

In den Rahmen der Erfindung fällt des Weiteren eine **Werkzeugaufnahme,** an der ein Werkzeugblatt der vorangehend beschriebenen Art montierbar ist. Die Werkzeugaufnahme weist eine Komplementärstruktur an wenigstens einer Seitenfläche der Werkzeugaufnahme auf, wobei die Komplementärstruktur wenigstens zwei Komplementärelemente umfasst, wobei die Komplementärstruktur mit ihren Komplementärelementen um eine zentrale Rotationsachse der Werkzeugaufnahme rotationssymmetrisch zu einem Rotationswinkel von weniger als 360°, insbesondere von höchstens 180°, jedoch zu keinem durch die Rotationsachse verlaufenden Durchmesser der Werkzeugaufnahme spiegelsymmetrisch ist.

Eine derartige Werkzeugaufnahme kann als Adapter für herkömmliche Werkzeugmaschinen dienen. An dieser kann ein Werkzeugblatt der vorangehend beschriebenen Art montierbar sein.

Die Werkzeugaufnahme kann eine Montageplatte aufweisen. An der Montageplatte kann die Komplementärstruktur ausgebildet sein.

Denkbar ist, die Werkzeugaufnahme, insbesondere die Montageplatte, an einer herkömmlichen Werkzeugmaschine anzuordnen. Dann kann das Werkzeugblatt auch an einer derart umgerüsteten, herkömmlichen Werkzeugmaschine mit den vorangehend beschriebenen Vorzügen nutzbar sein.

Denkbar ist auch, eine derartige Werkzeugaufnahme direkt an einer Werkzeugmaschine vorzusehen. Bei einer solchen Werkzeugmaschine ist es somit ausgeschlossen, dass das Werkzeugblatt versehentlich seitenverkehrt montiert wird.

Wenigstens eines der Komplementärelemente kann eine Fase aufweisen, sodass die Montage eines Werkzeugblatts vereinfacht wird.

Die Komplementärstruktur kann insbesondere komplementär zu der Struktur der Werkzeugplatte ausgebildet sein. Weist beispielsweise die Struktur der Werkzeugplatte als Elemente Ausnehmungen auf, so kann die Komplementärstruktur Vorsprünge, beispielsweise in Form von Stiften, an den den Ausnehmungen entsprechenden Positionen als Komplementärelemente aufweisen.

Die Werkzeugaufnahme kann zur werkzeuglosen Montage des Werkzeugblattes eingerichtet sein. Insbesondere, wenn das Werkzeugblatt als Element wenigstens einen Vorsprung, beispielsweise einen abgewinkelten Vorsprung, aufweist, kann der Vorsprung in eine Ausnehmung der Werkzeugaufnahme eingeschoben werden. Durch einen Hintergriff und / oder einen Rastmechanismus der Werkzeugaufnahme kann das Werkzeugblatt dann an dieser festgelegt werden. Dabei kann ausgenutzt werden, dass eine seitenverkehrte Montage des Werkzeugblattes nicht vorkommen kann. Der Rastmechanismus und / oder der Hintergriff können damit derart ausgelegt sein, dass sie sich bei Rotation des Werkzeugblattes selbsttätig schließen oder zumindest ein selbsttätiges Lösen der Verbindung des Werkzeugblattes mit der Werkzeugaufnahme ausgeschlossen ist.

Wenigstens ein Komplementärelement der Komplementärstruktur kann elektrisch leitfähig sein. Bei einer Ausnehmung oder einer Durchgangsöffnung kann darunter verstanden werden, dass eine Oberfläche eines Randbereichs des Komplementärelements elektrisch leitfähig ist.

Wenigstens eines der Komplementärelemente kann eine Fase aufweisen, sodass bei der Montage des Werkzeugblattes dieses besser auf bzw. in das Komplementärelement geschoben werden kann.

Weiter fällt ein **Werkzeugblatt-System** in den Rahmen der Erfindung, das eine Werkzeugaufnahme der vorangehend beschriebenen Art sowie ein Werkzeugblatt der vorangehend beschriebenen Art aufweist. Bei diesem ist die Komplementärstruktur der Werkzeugaufnahme komplementär zur Struktur des Werkzeugblattes ausgebildet, sodass das Werkzeugblatt an der Werkzeugaufnahme montiert werden kann, wobei eine seitenverkehrte Montage ausgeschlossen ist.

Weiter fällt in den Rahmen der Erfindung eine **Werkzeugmaschine,** die eingerichtet ist, ein Werkzeugblatt aufzunehmen und rotatorisch anzutreiben, umfassend eine Werkzeugaufnahme zur Aufnahme des Werkzeugblattes, wobei die Werkzeugaufnahme eine Werkzeugaufnahme nach der vorangehend beschriebenen Art aufweist. Die Werkzeugmaschine kann beispielsweise eine Kreissäge sein. Sie kann auch ein Winkelschleifer sein. Die Werkzeugmaschine kann eine Handwerkzeugmaschine sein. Denkbar ist auch, dass die Werkzeugmaschine an einem Bauroboter, beispielsweise zur Ausführung von Bauarbeiten im Hochbau, Tiefbau oder im Industrieanlagenbau, ausgebildet ist.

Gerade im Fall, dass die Werkzeugmaschine an einem Endeffektor eines Bauroboters ausgebildet und / oder angeordnet ist, kann auf zusätzliche Sensorik zur Prüfung, ob ein Werkzeugblatt seitenrichtig an der Werkzeugmaschine montiert ist, verzichtet werden oder grundsätzlich vorhandene Sensorik kann vereinfacht werden. Beispielsweise kann eine Sensorik genügen, die lediglich auf das Vorhandensein des Werkzeugblattes in der Werkzeugaufnahme prüft. Gerade bei hohen Autonomiegraden des Bauroboters lassen sich durch das Werkzeugblatt und insbesondere auch durch das Werkzeugblatt-System einschlägige Sicherheitsanforderungen einfacher erfüllen.

Ferner kann insbesondere an einem Endeffektor des Bauroboters Gewicht eingespart werden, so dass dessen Manövrierfähigkeit verbessert wird.

Bei Handwerkzeugmaschine können die eingangs genannten Risiken für einen Benutzer der Handwerkzeugmaschine reduziert werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Ausschnitt einer Werkzeugmaschine mit einem Werkzeugblatt-System,
- Fig. 2 bis Fig. 10: mehrere Werkzeugblätter,
- Fig. 11: ein Komplementärelement und
- Fig. 12: ein Werkzeugblatt in einer Seitenansicht.

In der nachfolgenden Beschreibung der Figuren werden zur Erleichterung des Verständnisses der Erfindung für gleiche oder sich funktional entsprechende Elemente jeweils die gleichen Bezugszeichen verwendet.

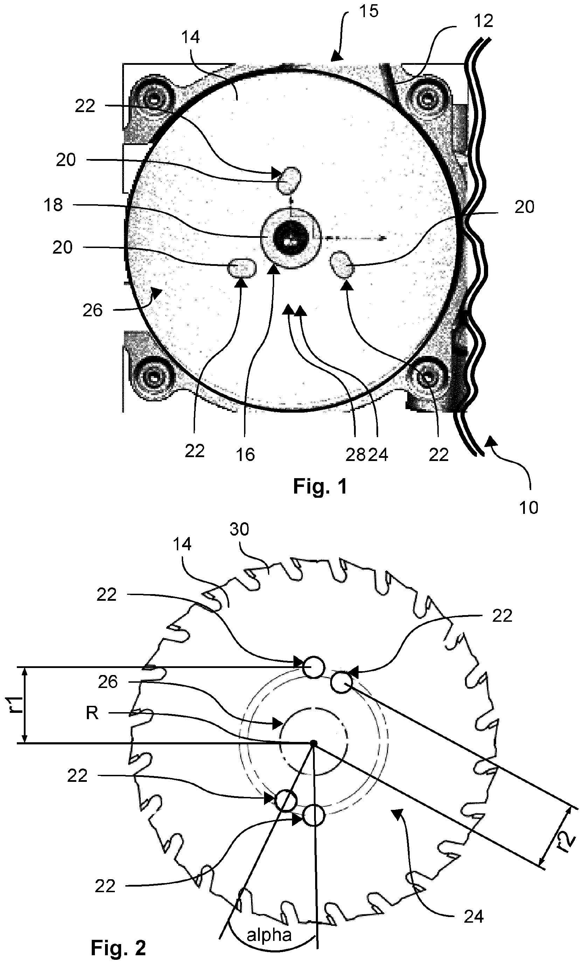

**Fig. 1** zeigt in einer Seitenansicht einen Ausschnitt einer Werkzeugmaschine **10** mit einer Werkzeugaufnahme **12,** in der ein Werkzeugblatt **14** montiert ist. Die Werkzeugaufnahme 12 und das Werkzeugblatt 14 bilden ein Werkzeugblatt-System **15.**

Die Werkzeugmaschine 10 ist als Winkelschleifer ausgebildet.

Das Werkzeugblatt 14 ist als Trennscheibe, beispielsweise zum Schneiden von Gestein oder Metall, ausgebildet.

Das Werkzeugblatt 14 weist eine zentrale Durchgangsöffnung **16** auf. Mit dieser sitzt das Werkzeugblatt 14 auf einer Rotationsachse **18** der Werkzeugaufnahme 12.

Die Werkzeugaufnahme 12 weist ferner mehrere, stiftförmige Komplementärelemente **20** auf, die in Elemente **22** einer Struktur **24** eingreifen. Die Elemente 22 sind als Langlöcher ausgebildet und reichen durch das Werkzeugblatt 14 hindurch. Sie weisen somit einen Querschnitt in Form eines abgerundeten Rechtecks auf. Die Komplementärelemente 20 sind komplementär zu den Elementen 22 ausgebildet. Sie weisen daher bei der dargestellten Ausführungsform ebenfalls einen Querschnitt in Form eines abgerundeten Rechtecks auf.

Da die Elemente 22 durch das Werkzeugblatt 14 hindurch ragen, weist das Werkzeugblatt 14 nicht nur auf seiner in Fig. 1 sichtbaren Seitenfläche **26** die Struktur 24 auf, sondern auch auf der in Fig. 1 nicht sichtbaren, gegenüberliegenden Seitenfläche.

Die Elemente 22 und damit auch die Komplementärelemente 20 verlaufen schräg zu ihren jeweiligen Radiuslinien als auch schräg zu ihren jeweiligen Tangenten.

Dadurch weist die Struktur 24, insbesondere ihre Elemente 22, eine dreizählige Rotationssymmetrie auf. Gleichzeitig weist die Struktur 24 jedoch zu keinem Durchmesser durch die zentrale Durchgangsöffnung 16, die eine Blattrotationsachse des Werkzeugblattes 14 bildet, eine Spiegelsymmetrie auf.

Die Komplementärelemente 20 bilden eine Komplementärstruktur **28.** Die Komplementärstruktur 28 ist somit komplementär zur Struktur 24 ausgebildet. Sie weist somit die gleiche dreizählige Rotationssymmetrie bei gleichzeitig nicht vorhandener Spiegelsymmetrie zu irgendeinem Durchmesser durch die Rotationsachse 18 auf.

**Fig. 2** zeigt ein Werkzeugblatt 14, das als Kreissägeblatt, beispielsweise zur Bearbeitung von Holzwerkstoffen, ausgebildet ist. Insbesondere weist das Werkzeugblatt 14 bei dieser Ausführungsform als Kreissägeblatt eine Vielzahl Sägezähne **30** auf, von denen zur Vereinfachung der Darstellung in Fig. 2 lediglich ein Sägezahn 30 mit einem Bezugszeichen versehen ist. Weiter ist der Mittelpunkt des Werkzeugblattes 14 und somit eine Blattrotationsachse **R** des Werkzeugblattes 14 markiert.

Das Werkzeugblatt 14 weist wiederum eine aus Elementen 22 gebildete Struktur 24 auf. Die Elemente 22 sind als kreisförmig Durchgangsöffnungen ausgebildet. Dabei sind insgesamt vier Elemente 22 vorgesehen, die jeweils auf zwei verschiedenen Radien **r1, r2** sowie sich jeweils paarweise gegenüberliegend ausgebildet sind. Die Struktur 24 ist somit punktsymmetrisch, d. h. sie weist eine zweizählige Rotationssymmetrie auf.

Paarweise sind jeweils Elemente 22 zu ihren benachbarten Elementen 22 um einen Zentralwinkel **alpha** versetzt. Der Zentralwinkel alpha ist kleiner als 90° und größer als 0°, beispielsweise im Bereich von 10° bis 40°.

Somit weist die Struktur 24 wiederum keine Spiegelsymmetrie zu irgendeinem Durchmesser durch die zentrale Durchgangsöffnung 26 bzw. zur Blattrotationsachse R des Werkzeugblattes 14 auf.

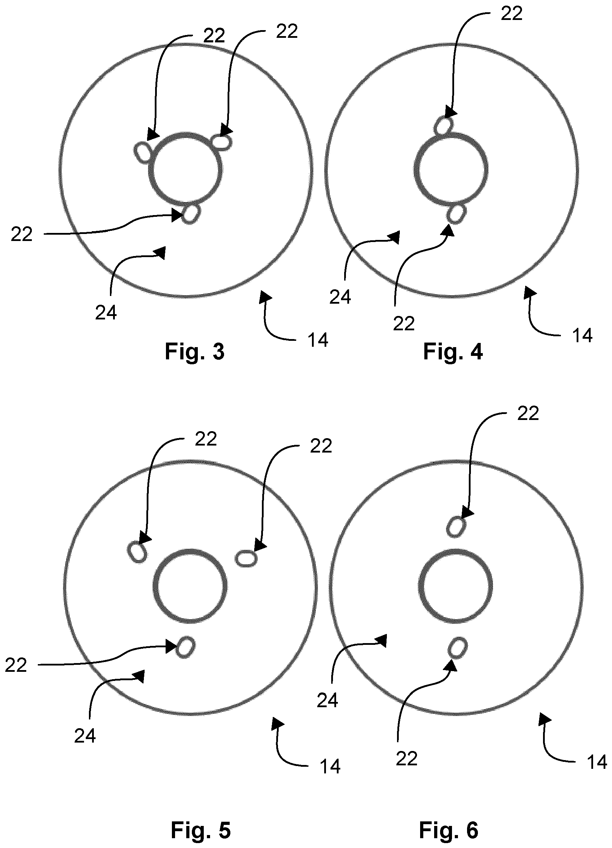

**Fig. 3** bis **Fig. 10** zeigen verschiedene Ausführungsformen von Werkzeugblättern 14 in schematischen Darstellungen. Insbesondere sind unterschiedliche Strukturen 24 zu erkennen.

Fig. 3, 5, 7, 9 zeigen Ausführungsformen mit Strukturen 24, die eine dreizählige Rotationssymmetrie aufweisen.

Fig. 4, 6, 8, 10 zeigen Ausführungsformen mit Strukturen 24, die eine zweizählige Rotationssymmetrie, also eine Punktsymmetrie, aufweisen.

Fig. 3 bis 6 weisen Elemente 22 auf, die als Langlöcher ausgebildet sind.

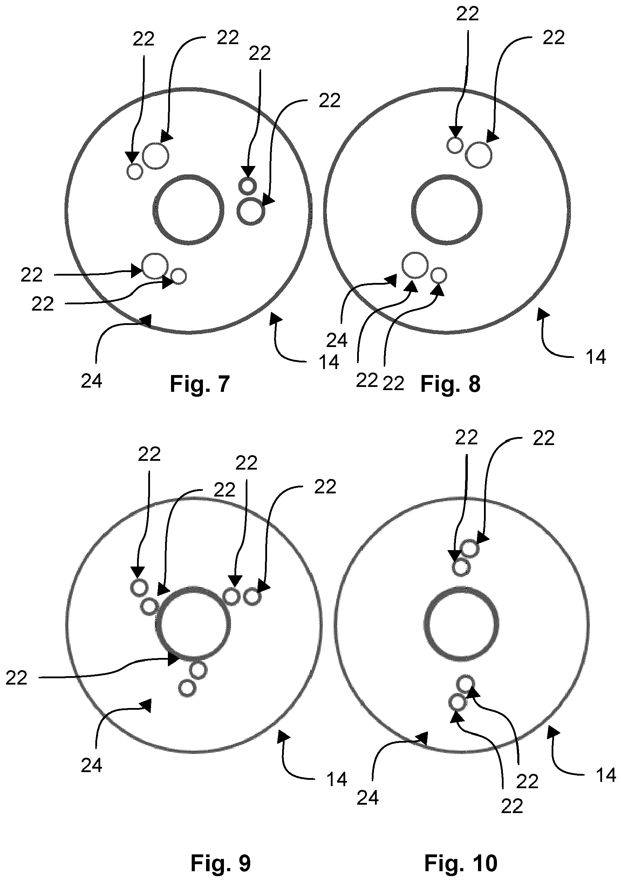

Fig. 7 bis 10 weisen Elemente 22 auf, die kreisförmig ausgebildet sind.

Fig. 3 und 5 zeigen Ausführungsformen mit insgesamt drei Elementen 22.

Fig. 4 und 6 zeigen Ausführungsformen mit insgesamt zwei Elementen 22.

Fig. 7 und 9 zeigen Ausführungsformen mit insgesamt sechs Elementen 22.

Fig. 8 und 10 zeigen Ausführungsformen mit insgesamt vier Elementen 22.

Wie aus Fig. 7 und 8 zu erkennen ist, kann die Rotationssymmetrie bei abwesender Spiegelsymmetrie auch dadurch erzielt werden, dass Elemente 22 zwar auf dem gleichen Radius angeordnet sind, sich aber in ihrer Form, beispielsweise in ihrer Größe, unterscheiden.

Mit den unterschiedlichen Strukturen 24 gemäß Fig. 3 bis 10 gehen auch unterschiedliche Biegesteifigkeiten und / oder unterschiedliche Schwingungsverhalten einher.

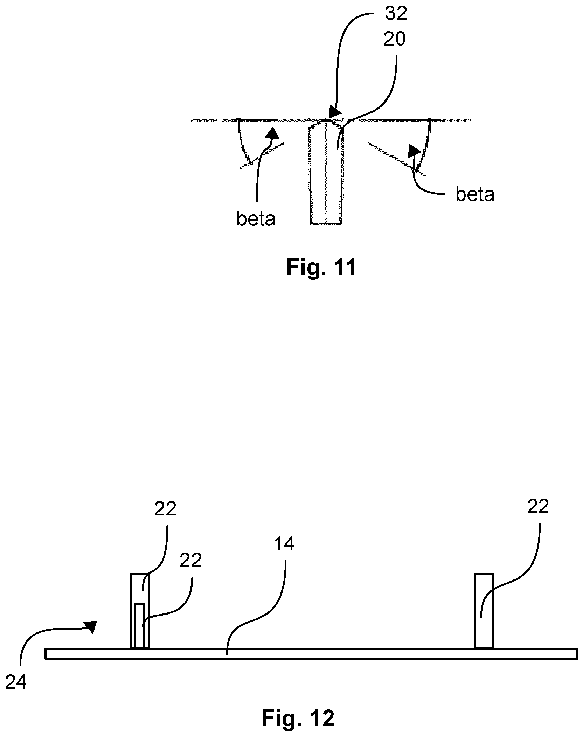

**Fig. 11** zeigt ein Komplementärelement 20. Das Komplementärelement 20 weist eine Fase 32 auf. Insbesondere ist die Fase 32 mit einem Abschrägungswinkel beta im Bereich von 10° bis 85°, insbesondere zwischen 10° und 40°, beispielsweise 30°, gefast.

Die Fase 32 ist in dem gezeigten Ausführungsbeispiele symmetrisch zur Längsachse des Komplementärelements 20 ausgebildet. Bei alternativen Ausführungsformen ist denkbar, dass die Fase 32 asymmetrisch gebildet ist. Eine asymmetrische Fase 32 kann die Montage des Werkzeugblattes 14 erleichtern.

**Fig. 12** zeigt ein weiteres Werkzeugblatt 14 in einer schematischen Seitenansicht. Es weist insgesamt vier Elemente 22 auf, von denen aufgrund der Seitenansicht gemäß Fig. 12 lediglich drei Elemente 22 sichtbar sind. Ein weiteres Element 22 ist durch ein anderes Element 22 verdeckt.

Bei diesem Ausführungsbeispiele sind die Elemente 22 als Vorsprünge ausgebildet. Ein solches Werkzeugblatt 14 kann an einer Werkzeugaufnahme 12 (siehe Fig. 1) montiert werden, bei der die Komplementärelemente 20 beispielsweise als Sacklöcher ausgebildet sind. Dann können bei der Montage die Elemente 22 in die Sacklöcher bzw. die Komplementärelemente 20 geschoben werden. Das Werkzeugblatt 14 kann somit auch mit Hilfe seiner Elemente 22 an der Werkzeugaufnahme 12 befestigt sein oder werden.

### Bezugszeichenliste

- 10: Werkzeugmaschine
- 12: Werkzeugaufnahme
- 14: Werkzeugblatt
- 15: System
- 16: Durchgangsöffnung
- 18: Rotationsachse
- 20: Komplementärelement
- 22: Element
- 24: Struktur
- 26: Seitenfläche
- 28: Komplementärstruktur
- 30: Sägezahn
- R: Blattrotationsachse
- alpha: Zentralwinkel
- r1: Radius
- r2: Radius

## Patentansprüche

1. Werkzeugblatt (14), insbesondere kreisförmiges Sägeblatt, das eine Struktur (24), die wenigstens zwei Elemente (22) umfasst, an wenigstens einer Seitenfläche (26) des Werkzeugblattes (14) aufweist, wobei die Struktur (24) mit ihren Elementen um eine zentrale Blattrotationsachse (R) des Werkzeugblattes (14) rotationssymmetrisch zu einem Rotationswinkel von weniger als 360°, insbesondere von höchstens 180°, jedoch zu keinem durch die Blattrotationsachse (R) verlaufenden Durchmesser des Werkzeugblattes (14) spiegelsymmetrisch ist.

2. Werkzeugblatt (14) nach dem vorhergehenden Anspruch, **dadurch gekennzeichnet, dass** die Struktur (24) punktsymmetrisch zur Blattrotationsachse (R) ist.

3. Werkzeugblatt (14) nach einem der vorhergehenden Ansprüche, **dadurch gekennzeichnet, dass** wenigstens eines der Elemente (22) eine Ausnehmung, insbesondere eine Durchgangsöffnung (16) durch Werkzeugblatt (14) hindurch, umfasst.

4. Werkzeugblatt (14) nach einem der vorhergehenden Ansprüche, **dadurch gekennzeichnet, dass** wenigsten eines der Element (22) einen Vorsprung umfasst, der aus der Seitenfläche (26) herausragt.

5. Werkzeugblatt (14) nach einem der vorhergehenden Ansprüche, **dadurch gekennzeichnet, dass** wenigstens zwei der Elemente (22) der Struktur (24) auf wenigstens zwei verschiedenen Radien (r1, r2) um die Blattrotationsachse (R) angeordnet sind.

6. Werkzeugblatt (14) nach einem der vorhergehenden Ansprüche, **dadurch gekennzeichnet, dass** das Werkzeugblatt (14) eine zentrale Durchgangsöffnung (16) aufweist.

7. Werkzeugblatt (14) nach einem der vorhergehenden Ansprüche, **dadurch gekennzeichnet, dass** wenigstens eines der Elemente (22) eine nicht-kreisförmige Form, beispielsweise ein Langloch, umfasst.

8. Werkzeugblatt (14) nach einem der vorhergehenden Ansprüche, **dadurch gekennzeichnet, dass** die Struktur (24) wenigstens 2 gleichartige Elemente (22) aufweist, die sich in ihrer Größe unterscheiden.

9. Werkzeugblatt (14) nach einem der vorhergehenden Ansprüche, **dadurch gekennzeichnet, dass** wenigstens eines der Elemente (22) eine Fase aufweist.

10. Werkzeugblatt (14) nach einem der vorhergehenden Ansprüche, **dadurch gekennzeichnet, dass** wenigstens eines der Elemente (22) elektrisch leitfähig ist.

11. **Werkzeugaufnahme (12),** an der ein Werkzeugblatt (14) nach einem der vorhergehenden Ansprüche montierbar ist, **dadurch gekennzeichnet, dass** die Werkzeugaufnahme (12) eine Komplementärstruktur (28) an wenigstens einer Seitenfläche (26) der Werkzeugaufnahme (12) aufweist, wobei die Komplementärstruktur (28) wenigstens zwei Komplementärelemente (20) umfasst, wobei die Komplementärstruktur (28) mit ihren Komplementärelementen um eine zentrale Rotationsachse (18) der Werkzeugaufnahme (12) rotationssymmetrisch zu einem Rotationswinkel von weniger als 360°, insbesondere von höchstens 180°, jedoch zu keinem durch die Rotationsachse (18) verlaufenden Durchmesser der Werkzeugaufnahme (12) spiegelsymmetrisch ist.

12. **Werkzeugblatt-System (15)** aus einer Werkzeugaufnahme (12) nach dem vorhergehenden Anspruch und einem Werkzeugblatt (14) nach einem der Ansprüche 1 bis 10, **dadurch gekennzeichnet, dass** die Komplementärstruktur (28) der Werkzeugaufnahme (12) komplementär zur Struktur (24) des Werkzeugblattes (14) ausgebildet ist.

13. **Werkzeugmaschine (10),** die eingerichtet ist, ein Werkzeugblatt (14) aufzunehmen und rotatorisch anzutreiben, beispielsweise eine Kreissäge oder ein Winkelschleifer, umfassend eine Werkzeugaufnahme (12) zur Aufnahme des Werkzeugblattes (14), wobei die Werkzeugaufnahme (12) eine Werkzeugaufnahme (12) nach Anspruch 11 aufweist.
